# EUROPÄISCHE PATENTANMELDUNG

(11) **EP 4 810 982 A1**
(43) Veröffentlichungstag der Anmeldung: **23.09.2026**
(21) Anmeldenummer: 26161129.7
(22) Anmeldetag: 26.02.2026
(51) Int. Cl.: G01S 5/02, H04W 56/00, G01S 5/14, H04W 4/029, H04W 4/80

(54) **VERFAHREN ZUM BETRIEB EINES ORTUNGSSYSTEMS UND MANAGEMENT-LAYER-EINRICHTUNG FÜR EIN ORTUNGSSYSTEM**

(30) Priorität: 18.03.2025 DE 102025110486
(71) Anmelder: TRUMPF Tracking Technologies GmbH, 71254 Ditzingen (DE)
(72) Erfinder: LEHMANN, Franz, 01217 Dresden (DE); BRAEUNIG, Stephan, 01217 Dresden (DE); STEPHAN, Frank, 01217 Dresden (DE); SCHUMANN, Danny, 01217 Dresden (DE)
(74) Vertreter: Manitz Finsterwald Patent- und Rechtsanwaltspartnerschaft mbB

(57) **Zusammenfassung**

Die Erfindung betrifft ein Verfahren zum Betrieb eines Ortungssystems zur Bestimmung einer Position (Po1, Po2) zumindest eines Tags (T1, T2), wobei das Ortungssystem einen Management-Layer-Dienst (MD), zumindest ein erstes Cluster (C1) mit einer Mehrzahl von ersten Ankern (S11, S12, S13, S14) und zumindest ein zweites Cluster (C2) mit einer Mehrzahl von zweiten Ankern (S21, S22, S23, S24) umfasst, wobei die Cluster (C1, C2) zueinander unterschiedlich konfiguriert sind, vorzugsweise zumindest hinsichtlich eines Kommunikationsprotokolls und/oder einer Kommunikationstechnologie. Die Erfindung betrifft ferner eine Management-Layer-Einrichtung (ME) für ein Ortungssystem zur Bestimmung einer Position (Po1, Po2) zumindest eines Tags (T1, T2), wobei das Ortungssystem zumindest ein erstes Cluster (C1) mit einer Mehrzahl von ersten Ankern (S11, S12, S13, S14) und zumindest ein zweites Cluster (C2) mit einer Mehrzahl von zweiten Ankern (S21, S22, S23, S24) umfasst, wobei die Cluster (C1, C2) zueinander unterschiedlich konfiguriert sind, vorzugsweise zumindest hinsichtlich eines Kommunikationsprotokolls und/oder einer Kommunikationstechnologie.

## Beschreibung

Die vorliegende Erfindung liegt auf dem Gebiet der Ortungssysteme für mobile Objekte und betrifft ein Verfahren zum Betrieb eines Ortungssystems zur Bestimmung einer Position zumindest eines Tags. Ferner betrifft die vorliegende Erfindung eine Management-Layer-Einrichtung für ein Ortungssystem zur Bestimmung einer Position zumindest eines Tags.

Ortungssysteme zur Bestimmung einer Position und/oder einer Bewegung eines mobilen Objekts innerhalb eines bestimmten räumlichen Bereichs sind in Abhängigkeit ihres Anwendungsgebiets und Einsatzzwecks unterschiedlich konfiguriert und müssen eine Vielzahl von Anforderungen erfüllen.

Im Bereich der Ortungssysteme gibt es unter anderem Kommunikationsstandards zur Realisierung einer hinreichend präzisen und zuverlässigen Positionsbestimmung von mobilen Objekten. Der Kommunikationsstandard "FiRa" (Abkürzung für "Fine Ranging") umfasst beispielsweise ein Kommunikationsprotokoll, welches von dem FiRa Consortium entwickelt wurde. "FiRa" ermöglicht beispielsweise die Bestimmung von Positionen von mobilen Objekten wie Smartphones in verschiedensten Anwendungsfeldern. "FiRa" spezifiziert die Nutzung einer Funkkommunikationstechnologie basierend auf einer Kombination der so genannten Ultra-Wideband-Technologie (abgekürzt "UWB-Technologie") und der so genannten Bluetooth-Technologie, insbesondere der so genannten Bluetooth Low Energy-Technologie (abgekürzt "BLE-Technologie"), um eine hinreichend präzise und zuverlässige Bestimmung der Position (Ortung) zu ermöglichen.

Der Kommunikationsstandard "omlox" umfasst ein weiteres Kommunikationsprotokoll im Bereich der Ortungssysteme. "omlox" nutzt eine Kombination aus UWB und einem IEEE802.15.4-basierten Datenkanal, um eine robuste und möglichst deterministische Bestimmung von Positionen von mobilen Objekten in industriellen und professionellen Umgebungen zu ermöglichen. Daneben erlaubt "omlox" die Integration verschiedener weiterer Funkkommunikationstechnologien, wie beispielsweise Bluetooth, RFID (Abkürzung für "radio-frequency identification"), GPS (Abkürzung für "Global Positioning System") oder WLAN (Abkürzung für "Wireless Local Area Network") als komplementäre Ortungstechnologien, um eine gute Bestimmung von Positionen von mobilen Objekten zu ermöglichen. "omlox" kommt beispielsweise bei Anwendungen in der Logistik, im Gesundheitswesen und in der Prozessindustrie zum Einsatz oder kann beispielsweise beim so genannten Asset-Tracking eingesetzt werden.

Zum Betrieb eines Ortungssystems kommt in der Regel ein so genannter Management-Layer zum Einsatz, welcher auf die jeweilige Kommunikationstechnologie oder auf das jeweilige Kommunikationsprotokoll zugeschnitten ist. Ein Management-Layer ist eine zentrale logische Schicht, welche die Einrichtung, Verwaltung und Steuerung übernimmt. Der Management-Layer steuert beispielsweise die Synchronisierung der Infrastruktur und weiterer zentraler Dienste.

In zunehmendem Maße werden Ortungssysteme eingesetzt, welche auf unterschiedlichen Kommunikationstechnologien basieren und/oder unterschiedliche Kommunikationsprotokolle einsetzen, um jeweiligen Anforderungen entsprechen zu können. Jeder Kommunikationstechnologie oder jedem Kommunikationsprotokoll ist ein eigener Management-Layer zugeordnet, welcher auf die jeweilige Kommunikationstechnologie oder auf das jeweilige Kommunikationsprotokoll spezifisch abgestimmt ist.

Der Einsatz unterschiedlich abgestimmter und somit unterschiedlich konfigurierter Management-Layer führt allerdings beispielsweise zu einem Mehraufwand und verursacht unnötige Kosten. Ferner können unterschiedlich konfigurierte Management-Layer zu Problemen bei der Bestimmung der Position eines mobilen Objekts führen, welches beispielsweise einen Zonenwechsel vollzieht, womit ein Wechsel der Kommunikationstechnologie oder des Kommunikationsprotokolls einhergeht. Ein Zonenwechsel des Ortungssystems kann beispielsweise beim räumlichen Übergang eines mobilen Objekts, zum Beispiel in Form eines Flurförderfahrzeugs, von einem Innenbereich innerhalb eines Gebäudes in einen Außenbereich außerhalb des Gebäudes erfolgen.

Es ist eine Aufgabe der vorliegenden Erfindung, ein Verfahren zum Betrieb eines Ortungssystems mit unterschiedlichen Kommunikationsprotokollen und/oder Kommunikationstechnologien bereitzustellen, welches hinsichtlich der Bestimmung einer Position eines mobilen Objekts verbessert ist, insbesondere bei einem Wechsel der Kommunikationstechnologie im Zuge eines Zonenwechsels des mobilen Objekts. Ferner ist es eine Aufgabe der vorliegenden Erfindung, eine Management-Layer-Einrichtung bereitzustellen, welche zum Betrieb eines Ortungssystems mit unterschiedlichen Kommunikationsprotokollen und/oder Kommunikationstechnologien in der gleichen Zone konfiguriert ist.

Die Aufgabe wird durch die Merkmale der unabhängigen Ansprüche 1 und 12 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt ein Verfahren zum Betrieb eines Ortungssystems zur Bestimmung einer Position zumindest eines Tags, wobei das Ortungssystem einen Management-Layer-Dienst, zumindest ein erstes Cluster mit einer Mehrzahl von ersten Ankern und zumindest ein zweites Cluster mit einer Mehrzahl von zweiten Ankern umfasst, wobei die Cluster hinsichtlich ihres Abdeckungsbereichs zumindest teilweise überlappen und zueinander unterschiedlich konfiguriert sind, vorzugsweise zumindest hinsichtlich eines Kommunikationsprotokolls und/oder einer Kommunikationstechnologie, umfassend: a) Herstellen einer Kommunikationsverbindung zwischen dem Management-Layer-Dienst und der Mehrzahl von ersten Ankern; b) Herstellen einer Kommunikationsverbindung zwischen dem Management-Layer-Dienst und der Mehrzahl von zweiten Ankern; c) Synchronisieren der Mehrzahl von ersten Ankern und/oder der Mehrzahl von zweiten Ankern jeweils orchestriert durch den Management-Layer-Dienst; d) Herstellen einer Kommunikationsverbindung zwischen der Mehrzahl von ersten Ankern, vorzugsweise der Mehrzahl von synchronisierten ersten Ankern, und der Mehrzahl von zweiten Ankern, vorzugsweise der synchronisierten Mehrzahl von zweiten Ankern, durch den Management-Layer-Dienst, um ein definiertes Bestimmen der Position des zumindest einen Tags zumindest über den zumindest einen ersten und den zumindest einen zweiten Cluster hinweg im Wesentlichen kontinuierlich und/oder im Wesentlichen konsistent zu gewährleisten.

Mit der vorliegenden Erfindung kann ein Verfahren zum Betrieb eines Ortungssystems zur Bestimmung einer Position zumindest eines Tags bereitgestellt werden, welches bei Anwendung unterschiedlich konfigurierter Cluster, welche beispielsweise auf unterschiedlichen Kommunikationsprotokollen und/oder Kommunikationstechnologien basieren, verbessert ist, indem eine Kommunikationsverbindung zwischen jeweiligen Ankern des zumindest einen ersten Clusters und des zumindest einen zweiten Clusters hergestellt wird, eine Synchronisierung jeweils durch den (identischen) Management-Layer-Dienst orchestriert wird, und eine Kommunikationsverbindung zwischen den jeweils zueinander synchronisierten Ankern durch den Management-Layer-Dienst hergestellt wird. Der Management-Layer-Dienst ist demnach vorzugsweise ein einziger und/oder ein gemeinsamer und/oder ein zentraler Management-Layer-Dienst. Der Management-Layer-Dienst ist zur Orchestrierung der Synchronisierung unterschiedlich konfigurierter Cluster konfiguriert, womit mehrere (individuell konfigurierte) Management-Layer-Dienste für jeweilige Cluster vermieden werden können oder entbehrlich sind. Ferner ist der Management-Layer-Dienst vorzugsweise zur Herstellung einer Kommunikationsverbindung zwischen unterschiedlich konfigurierten Clustern konfiguriert.

Der zumindest eine Tag (auch als "Transponder" oder "Marker" bezeichnet") kann ein aktiver Tag sein und ein Signal senden. Alternativ kann der zumindest einen Tag ein passiver Tag sein und ein Signal reflektieren. Der zumindest eine Tag kann zumindest einer von Folgenden sein und/oder zumindest einen von Folgenden umfassen: ein UWB-Tag, ein BLE-Tag, ein UWB-/BLE-Tag, ein RFID-Tag, ein WLAN-Tag. Weitere Konfigurationen des zumindest einen Tags sind möglich. Der zumindest eine Tag kann als Transponder an einem mobilen Objekt angeordnet sein. Das mobile Objekt kann beispielsweise ein Flurförderfahrzeug (zum Beispiel in Form eines Staplerfahrzeugs) oder ein mobiles handführbares Endgerät (zum Beispiel in Form eines Smartphones oder eines Tablets) sein.

Ein Anker (auch als "Referenzpunkt", "Satellit" oder "Beacon" bezeichnet) ist vorzugsweise eine räumlich fest-installierte Kommunikationseinrichtung (zum Beispiel mit einer definierten und/oder bekannten Position), welche mit dem zumindest einen Tag eine drahtlose Kommunikationsverbindung ausbilden kann. Ein Anker kann zumindest einer von Folgenden sein und/oder einen von Folgenden umfassen: ein UWB-Anker, ein BLE-Anker, ein UWB-/BLE-Anker, ein RFID-Anker, ein WLAN-Anker. Weitere Konfigurationen des Ankers sind möglich. Die Mehrzahl von ersten Ankern des zumindest einen ersten Clusters und die Mehrzahl von zweiten Ankern des zumindest einen zweiten Clusters sind vorzugsweise voneinander logisch getrennt. Es ist möglich, dass zumindest ein erster Anker und zumindest ein zweiter Anker jeweils an derselben definierten und/oder bekannten Position angeordnet sind. Es ist möglich, dass zumindest ein erster Anker und zumindest ein zweiter Anker eine Anker-Einheit (auch als "Lokalisierungs-Hub" bezeichnet) ausbilden.

Mehrere Anker, welche hinsichtlich einer gemeinsamen Kommunikationstechnologie und/oder hinsichtlich eines gemeinsamen Kommunikationsprotokolls konfiguriert sind, können zu einem Cluster zusammengefasst sein und/oder einem Cluster zugeordnet sein. Das Cluster ist durch eine Mehrzahl von Ankern gekennzeichnet. Die Anordnung oder Konfiguration der Mehrzahl von Ankern bildet vorzugsweise eine Topologie, welche dem Cluster zugeordnet ist und/oder durch welche das Cluster gekennzeichnet ist. Mit anderen Worten wird eine Topologie durch eine Mehrzahl von Ankern ausgebildet.

Eine jeweilige Kommunikationstechnologie und/oder ein jeweiliges Kommunikationsprotokoll kann zumindest einer von folgenden Kommunikationstechnologien zugeordnet sein und/oder zumindest darauf basieren: UWB-Technologie, BLE-Technologie, RFID-Technologie, WLAN-Technologie, GPS/GNSS-Technologie, Ultraschall-Technologie, Optische Technologie, etc.

Ein Abdeckungsbereich eines Clusters definiert vorzugsweise diejenige räumliche Zone, innerhalb welcher die Mehrzahl von Ankern des jeweiligen Clusters Signale senden, empfangen und/oder verarbeiten kann, um die Position des zumindest einen Tags zu bestimmen. Der Abdeckungsbereich kann beispielsweise durch die Sende- und Empfangsleistung der Mehrzahl von Ankern, die Empfangscharakteristik des zumindest einen Tags und durch physikalische Gegebenheiten der Umgebung (zum Beispiel Hindernisse, Materialien, etc.) definiert sein.

Das Orchestrieren des Synchronisierens der Mehrzahl von ersten Ankern und/oder der Mehrzahl von zweiten Ankern jeweils durch den Management-Layer-Dienst umfasst beispielsweise ein Initiieren, ein Aufrechterhalten und/oder ein Beenden einer Koordination zur Abstimmung der Mehrzahl von Ankern eines jeweiligen Clusters in zeitlicher Hinsicht. Das Orchestrieren kann in Abhängigkeit des jeweiligen Clusters und/oder seiner Änderung der Konfiguration dynamisch sein, beispielsweise bei einem Ausfall eines Ankers.

Gemäß einem weiteren Aspekt der vorliegenden Erfindung kann vorgesehen sein, dass das Synchronisieren in Abhängigkeit einer jeweiligen Topologie des zumindest einen ersten Clusters und/oder des zumindest einen zweiten Clusters in einer definierten Reihenfolge erfolgt, vorzugsweise um eine Synchronisationszeitdauer zu verkürzen, wobei vorzugsweise die definierte Reihenfolge abschnittsweise durch einen baumförmigen Verlauf und/oder abschnittsweise durch einen kaskadenförmigen Verlauf gekennzeichnet ist, und/oder wobei vorzugsweise die definierte Reihenfolge und/oder die jeweilige Topologie durch eine räumliche Anordnung und/oder durch Kommunikationsadressen, vorzugsweise MAC-Kommunikationsadressen, der Mehrzahl von ersten Ankern und der Mehrzahl von zweiten Ankern definiert wird. So könnte beispielsweise die Synchronisierung eines "omlox"-basierten Clusters für ein "FiRa"-basiertes Cluster mit teilweise identischen physischen, aber logisch getrennten Ankern genutzt werden.

Die definierte Reihenfolge kann ein hinsichtlich der Anker benachbartes Fortschreiten der Synchronisierung umfassen. Ein kaskadenförmiger Verlauf umfasst vorzugsweise eine Synchronisierung der jeweiligen Mehrzahl von Ankern in einer definierten Reihenfolge, wobei ein Anker mit einem vorher synchronisierten Anker synchronisiert wird. Mit anderen Worten stellt ein kaskadenförmiger Verlauf eine sequentielle Synchronisierung von Ankern dar. Ein baumförmiger Verlauf umfasst vorzugsweise eine Synchronisierung der jeweiligen Mehrzahl von Ankern nach einer hierarchischen Struktur, wobei ein Anker mit einem jeweiligen übergeordneten Anker entsprechender Priorität synchronisiert wird. Eine Synchronisierung der jeweiligen Mehrzahl von Ankern nach einem baumförmigen Verlauf und somit nach einer hierarchischen Struktur kann zumindest teilweise zeitlich voneinander entkoppelt erfolgen, womit beispielsweise eine Verkürzung der Synchronisierung einhergeht. Dadurch können beispielsweise Anker außerhalb ihres Sende- und Empfangsbereichs im Wesentlichen simultan und somit im Wesentlichen gleichzeitig synchronisiert werden, ohne dabei zu interferieren.

Es ist möglich, dass das Synchronisieren in Abhängigkeit einer jeweiligen Topologie des zumindest einen ersten Clusters und/oder des zumindest einen zweiten Clusters definiert sequentiell, definiert überlagernd und/oder definiert periodisch erfolgt, vorzugsweise von einem jeweiligen Referenzanker der Mehrzahl von ersten Ankern und der Mehrzahl von zweiten Ankern ausgehend.

Ein definiert sequentielles Synchronisieren kann beispielsweise ein zeitlich vorgelagertes Synchronisieren des zumindest einen ersten Clusters vor dem zumindest einen zweiten Cluster umfassen, beispielsweise bei voneinander unabhängigen Aufgaben des zumindest einen ersten und des zumindest einen zweiten Clusters. Ein definiert überlagerndes Synchronisieren kann beispielsweise ein zeitlich zumindest teilweise überlappendes Synchronisieren des zumindest einen ersten Clusters und den zumindest einen zweiten Clusters umfassen. Ein definiert periodisches Synchronisieren kann ein Synchronisieren des zumindest einen ersten Clusters und/oder des zumindest einen zweiten Clusters jeweils nach einer definierten Zeitdauer umfassen.

Das Verfahren kann umfassen: Verändern und/oder Anpassen einer jeweiligen Topologie des zumindest einen ersten Clusters und/oder des zumindest einen zweiten Clusters durch den Management-Layer-Dienst, um eine Ausbreitung von Zeitfehlern zwischen jeweiligen Ankern der Mehrzahl von ersten Ankern und/oder der Mehrzahl von zweiten Ankern zu minimieren und/oder im Wesentlichen zu vermeiden.

Es ist möglich, dass das Synchronisieren in Abhängigkeit einer jeweiligen Priorität der Anker innerhalb des zumindest einen ersten Clusters und/oder der Anker innerhalb des zumindest einen zweiten Clusters erfolgt, wobei vorzugsweise die jeweilige Priorität dynamisch von dem Management-Layer-Dienst festgelegt wird.

Durch das Synchronisieren von Ankern in Abhängigkeit einer jeweiligen Priorität innerhalb eines Clusters kann beispielsweise eine präzisere, effizientere und stabilere Bestimmung der Position des zumindest einen Tags realisiert werden. Dies kann beispielsweise im Zuge eines Zonenwechsels des zumindest einen Tags zwischen dem zumindest einen ersten Cluster und dem zumindest einen zweiten Cluster erfolgen.

Das Synchronisieren kann umfassen: Erzeugen zumindest eines Synchronisierungssignals, welches zumindest eine Zeitstempelinformation und/oder zumindest eine Korrekturwertinformation umfasst, welche jeweils mittels einer bidirektionalen Kommunikationsverbindung zueinander benachbarter Ankern erfasst ist, um in Abhängigkeit des erzeugten zumindest einen Synchronisierungssignals das Synchronisieren dynamisch anzupassen und/oder einen Zeitgleichlauf der Mehrzahl von Ankern einzustellen, wobei vorzugsweise die zumindest eine Zeitstempelinformation eine Zeitdifferenz, eine Laufzeit und/oder eine Phasenverschiebung umfasst, und/oder wobei vorzugsweise die zumindest eine Korrekturwertinformation zur Kompensation von Laufzeitunterschieden dient.

Das Verfahren kann umfassen: Ausführen eines Einrichtungsmodus durch den Management-Layer-Dienst, um zumindest ein weiteres Cluster mit einer Mehrzahl von weiteren Ankern zu detektieren; Bestimmen zumindest einer weiteren Topologie des zumindest einen weiteren Clusters in Abhängigkeit zumindest eines Einrichtungssignals; und Wiederholen der Verfahrensschritte b), c) und d) hinsichtlich des zumindest einen weiteren Clusters.

Dadurch kann das Verfahren beispielsweise an ein sich verändertes Ortungssystem mit jeweiligen Clustern dynamisch angepasst werden. Es ist dadurch beispielsweise auch kein weiterer (separater) Management-Layer-Dienst erforderlich.

Das Verfahren kann umfassen: Bestimmen der Positionen der weiteren Anker in Abhängigkeit des zumindest einen Einrichtungssignals und/oder Abrufen der Positionen der weiteren Anker; Konfigurieren und/oder Anpassen der Kommunikationsverbindung mit denjenigen weiteren Ankern, welche in Abhängigkeit ihrer bestimmten und/oder abgerufenen Position außerhalb einer definierten Kommunikationsreichweite liegen, um eine im Wesentlichen durchgehende Kommunikationsverbindung und/oder eine im Wesentlichen interferenzfreie Kommunikation zu gewährleisten.

Beispielsweise kann eine definierte Sende- und/oder Empfangsleistung von jeweiligen Ankern eingestellt werden, um eine Reichweite und/oder Zuverlässigkeit der Kommunikationsverbindung zwischen Ankern und dem zumindest einen Tag und/oder oder zwischen jeweiligen Ankern untereinander zu verbessern oder regulatorischen Ansprüchen zu genügen.

Das Verfahren kann umfassen: Unterteilen des zumindest einen ersten Clusters und/oder des zumindest einen zweiten Clusters in jeweils zumindest ein erstes Sub-Cluster und zumindest ein zweites Sub-Cluster mit jeweils einer definierten Anzahl an Ankern der Mehrzahl von ersten Ankern und/oder der Mehrzahl von zweiten Ankern; und Wiederholen der Verfahrensschritte c) und d) hinsichtlich des jeweils zumindest einen ersten und zweiten Sub-Clusters.

Das Verfahren kann umfassen: Zusammenführen des zumindest einen ersten Sub-Clusters und des zumindest einen zweiten Sub-Clusters sobald und/oder wenn ein Synchronisieren der definierten Anzahl an Ankern der Mehrzahl von ersten Ankern und/oder der Mehrzahl von zweiten Ankern erfolgt ist.

Das definierte Bestimmen der Position des zumindest einen Tags kann beispielsweise durch zumindest eine von folgenden Methoden erfolgen: Trilateration, vorzugsweise in Kombination mit der Ultra-Wideband (UWB)-Technologie; Triangulation, vorzugsweise in Kombination mit der Bluetooth Low Energy (BLE)-Technologie.

Es sind selbstverständlich auch andere Methoden möglich, zum Beispiel RSSI-basiertes Fingerprinting (RSSI als Abkürzung für "Received Signal Strength Indicator").

Die vorliegende Erfindung betrifft nach einem zweiten allgemeinen Gesichtspunkt eine Management-Layer-Einrichtung für ein Ortungssystem zur Bestimmung einer Position zumindest eines Tags, wobei das Ortungssystem zumindest ein erstes Cluster mit einer Mehrzahl von ersten Ankern und zumindest ein zweites Cluster mit einer Mehrzahl von zweiten Ankern umfasst, wobei die Cluster hinsichtlich ihres Abdeckungsbereichs zumindest teilweise überlappen und zueinander unterschiedlich konfiguriert sind, vorzugsweise zumindest hinsichtlich eines Kommunikationsprotokolls und/oder einer Kommunikationstechnologie, wobei die Management-Layer-Einrichtung konfiguriert ist: a) eine Kommunikationsverbindung mit der Mehrzahl von ersten Ankern herzustellen; b) eine Kommunikationsverbindung mit der Mehrzahl von zweiten Ankern herzustellen; c) eine Synchronisierung der Mehrzahl von ersten Ankern und/oder der Mehrzahl von zweiten Ankern zu orchestrieren; d) eine Kommunikationsverbindung zwischen der Mehrzahl von ersten Ankern, vorzugsweise der synchronisierten Mehrzahl von ersten Ankern, und der Mehrzahl von zweiten Ankern, vorzugsweise der synchronisierten Mehrzahl von zweiten Ankern, herzustellen, um ein definiertes Bestimmen der Position des zumindest einen Tags zumindest über den zumindest einen ersten und den zumindest einen zweiten Cluster hinweg im Wesentlichen kontinuierlich und/oder im Wesentlichen konsistent zu gewährleisten, wobei vorzugsweise die Management-Layer-Einrichtung konfiguriert ist, ein Verfahren wie hierin offenbart auszuführen.

Die Management-Layer-Einrichtung ist vorzugsweise eine zentrale Einrichtung. Die Management-Layer-Einrichtung kann zur Bereitstellung eines einzigen und/oder eines zentralen Management-Layer-Dienstes wie hierin offenbart konfiguriert sein. Der Management-Layer-Dienst kann auf der Management-Layer-Einrichtung ausgeführt werden. Der Management-Layer-Dienst und somit die Management-Layer-Einrichtung kann zur Synchronisierung und zur Herstellung einer Kommunikationsverbindung zwischen dem zumindest einen ersten Cluster und dem zumindest einen zweiten Cluster konfiguriert sein.

Gemäß einem weiteren Gesichtspunkt der vorliegenden Erfindung kann vorgesehen sein, dass die Management-Layer-Einrichtung eine zentrale Schnittstelleneinheit umfasst, welche konfiguriert ist, jeweilige Kommunikationssignale der Kommunikationsverbindungen mit der Mehrzahl von ersten Ankern und mit der Mehrzahl von zweiten Ankern in Abhängigkeit der Konfiguration des jeweils anderen Clusters zu konvertieren und/oder zu übersetzen, um eine Kompatibilität zwischen den Kommunikationsverbindungen herzustellen.

Die vorliegende Erfindung betrifft nach einem dritten allgemeinen Gesichtspunkt ein Computerprogrammprodukt, welches einen Computerprogrammcode umfasst, der auf einem maschinenlesbaren Medium gespeichert ist und/oder durch zumindest eine elektromagnetische Welle repräsentiert wird, welche zumindest ein Computerprogrammcodesegment des Computerprogrammcodes umfasst, wobei der Computerprogrammcode computerausführbare Anweisungen zum Ausführen eines Verfahrens zum Betrieb eines Ortungssystems wie hierin offenbart umfasst, vorzugsweise bei Ausführung auf einer Management-Layer-Einrichtung wie hierin offenbart.

Die vorliegende Erfindung kann nach einem weiteren allgemeinen Gesichtspunkt ein Ortungssystem zur Bestimmung einer Position zumindest eines Tags betreffen, welches wie hierin offenbart konfiguriert ist, welches zur Ausführung des Verfahrens wie hierin offenbart konfiguriert ist und/oder welches eine Management-Layer-Einrichtung wie hierin offenbart umfasst.

Zur Vermeidung von Wiederholungen sollen rein auf die Vorrichtung der erfindungsgemäßen Management-Layer-Einrichtung gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig oder zweckmäßig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: zeigt in schematischer Darstellung ein erstes Ortungssystem, welches mit dem Verfahren gemäß der vorliegenden Erfindung betrieben werden kann, wobei das Ortungssystem eine Management-Layer-Einrichtung und einen Management-Layer-Dienst gemäß der vorliegenden Erfindung umfasst;
- Fig. 2: zeigt in schematischer Darstellung ein zweites Ortungssystem, welches mit dem Verfahren gemäß der vorliegenden Erfindung betrieben werden kann, wobei das Ortungssystem eine Management-Layer-Einrichtung und einen Management-Layer-Dienst gemäß der vorliegenden Erfindung umfasst;
- Fig. 3: ein Ablaufdiagramm eines ersten Ausführungsbeispiels des Verfahrens gemäß der vorliegenden Erfindung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

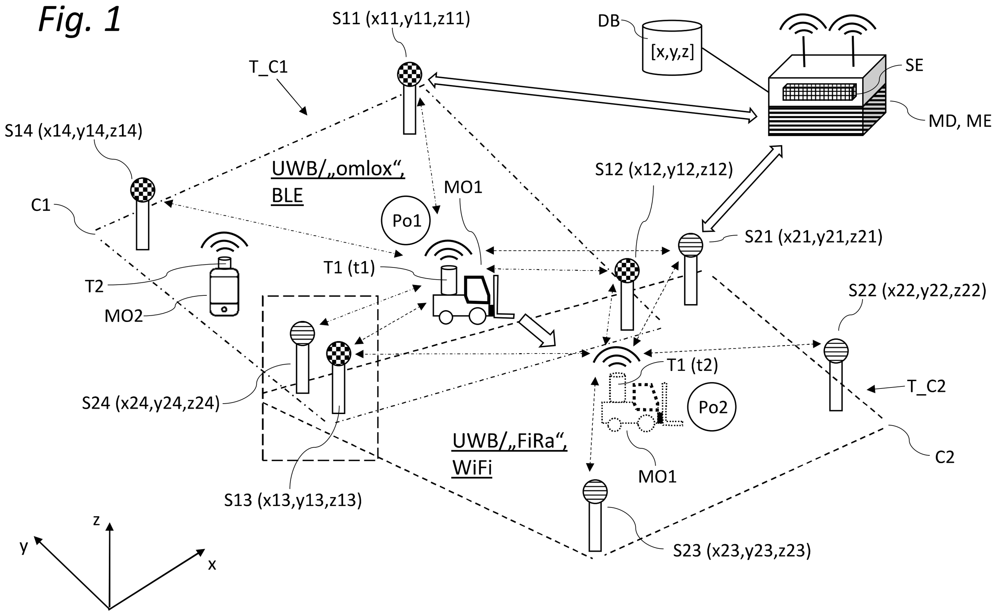

Figur 1 zeigt in schematischer Darstellung ein erstes Ortungssystem, welches mit dem Verfahren gemäß der vorliegenden Erfindung betrieben werden kann und/oder welches zur Ausführung des Verfahrens gemäß der vorliegenden Erfindung konfiguriert ist. Das Ortungssystem kann als ein erfindungsgemäßes Ortungssystem ausgebildet und/oder konfiguriert sein.

Das Ortungssystem umfasst ein erstes Cluster C1 und ein zweites Cluster C2. Das erste Cluster C1 umfasst eine Mehrzahl von ersten Ankern S11, S12, S13, S14, und das zweite Cluster C2 umfasst eine Mehrzahl von zweiten Ankern S21, S22, S23, S24. Zur Veranschaulichung der Zuordnung der ersten und zweiten Anker S11, S12, S13, S14, S21, S22, S23, S24 zu dem jeweiligen Cluster C1, C2 sowie des damit einhergehenden Abdeckbereichs des jeweiligen Clusters C1, C2 sind in Figur 1 eine strichpunktierte Linie und eine gestrichelte Linie jeweils als Abgrenzungslinie symbolisch dargestellt. Das erste Cluster C1 kann beispielsweise innerhalb einer Produktionshalle der Prozessindustrie angeordnet sein und das zweite Cluster C2 kann außerhalb dieser Produktionshalle angeordnet sein (in den Figuren aus Gründen der Übersichtlichkeit ausgeblendet).

Die Anker S11, S12, S13, S14, S21, S22, S23, S24 sind als Referenzpunkte des jeweiligen Clusters C1, C2 zur Bestimmung eines Tags T1, T2 an definierten und/oder bekannten Positionen angeordnet. Die definierten und/oder bekannten Positionen sind durch die Angaben jeweiliger Koordinatenwerte (x11,y11,z11) für den Anker S11 bis (x24,y24,z24) für den Anker S24 eines Referenzkoordinatensystems x,y,z veranschaulicht. Die definierten und/oder bekannten Positionen können in einer Datenbank DB des Ortungssystems gespeichert sein. Hinsichtlich ihres Abdeckungsbereichs überlappen das erste Cluster C1 und das zweite Cluster C2 zumindest teilweise. Der Abdeckungsbereich des ersten Clusters C1 definiert eine erste räumliche Zone, innerhalb welcher die Anker S11, S12, S13, S14 Signale senden, empfangen und/oder verarbeiten können, um die Position von Tags T1, T2 zu bestimmen. Entsprechendes gilt für den Abdeckungsbereich des zweiten Clusters C2 mit den Ankern S21, S22, S23, S24.

Es ist auch möglich, dass ein Anker sowohl zum ersten Cluster als auch zum zweiten Cluster gehört. Ein solcher Anker wird im Folgenden als Doppelanker bezeichnet. In diesem Beispiel kann ein Doppelanker die beiden Anker S13 des ersten Clusters C1 und der Anker S24 des zweiten Clusters C2 vereinen. In Fig. 1 ist dies durch die gestrichelten Linien angedeutet. Die Koordinaten des Ankers S13 und des Ankers S24 sind dann identisch. Bevorzugt wird für die Zugehörigkeit des Doppelankers zu den Clustern ein Zeitschlitzverfahren genutzt. Der Doppelanker gehört dann abwechselnd während eines Zeitschlitzes zum ersten Cluster C1 und während eines zweiten Zeitschlitzes zu C2. Der Doppelanker nutzt zur Kommunikation während der Zeitschlitze den Kommunikationsstandard des entsprechenden Clusters. Innerhalb des ersten Clusters C1 wird der Doppelanker als Anker S13 und innerhalb des zweiten Clusters S24 wird Doppelanker als Anker S24 erkannt.

Die Anker S11, S12, S13, S14 des ersten Clusters C1 bilden zusammen eine erste Topologie T_C1, und die Anker 521, S22, S23, S24 des zweiten Clusters C2 bilden zusammen eine zweite Topologie T_C2. Jeder der Anker S11, S12, S13, S14, S21, S22, S23, S24 kann durch eine definierte Priorität innerhalb des jeweiligen Clusters C1, C2 gekennzeichnet sein, beispielsweise in Abhängigkeit der räumlichen Anordnung, das heißt der jeweiligen definierten und/oder bekannten Position. Mit anderen Worten können die Anker S11, S12, S13, S14, S21, S22, S23, S24 untereinander durch eine jeweils unterschiedliche Priorität gekennzeichnet sein. Jeder der Anker S11, S12, S13, S14, S21, S22, S23, S24 kann durch eine ihm zugeordnete Kommunikationsadresse, vorzugsweise MAC-Kommunikationsadresse, gekennzeichnet und/oder identifizierbar sein.

Das erste Cluster C1 und das zweite Cluster C2 sind zueinander unterschiedlich konfiguriert. Das erste Cluster C1 ist hinsichtlich eines ersten Kommunikationsprotokolls und/oder einer ersten Kommunikationstechnologie konfiguriert, und das zweite Cluster C2 ist hinsichtlich eines zweiten Kommunikationsprotokolls und/oder einer zweiten Kommunikationstechnologie konfiguriert. Bei dem dargestellten Ausführungsbeispiel ist das erste Cluster C1 beispielsweise nach der UWB-Technologie (beispielsweise basierend auf "omlox") und/oder nach der BLE-Technologie konfiguriert, wobei eine definierte Bestimmung der Position Po1 des Tags T1 zum Zeitpunkt t1 mittels der Ultra-Wideband-Funkkommunikationstechnologie und/oder mittels der Bluetooth Low Energie-Funkkommunikationstechnologie erfolgt.

Ein definiertes Bestimmen der Position des zumindest einen Tags T1 durch das erste Cluster C1 kann daher beispielsweise durch die Methode der Trilateration, vorzugsweise in Kombination mit der UWB-Technologie, und/oder durch die Methode der Triangulation, vorzugsweise in Kombination mit der BLE-Technologie, erfolgen, wobei jeweils in Abhängigkeit der Methode und/oder Funkkommunikationstechnologie entsprechende Signallaufzeiten und/oder Winkel des Signalempfangs erfasst werden.

Das zweite Cluster C2 ist beispielsweise nach der UWB-Technologie (beispielsweise basierend auf "FiRa") und/oder der WiFi-Technologie (Funktechnologie auf Basis des Standards 802.11) konfiguriert, wobei eine definierte Bestimmung der Position Po2 des Tags T1 zum Zeitpunkt t2 mittels UWB (beispielsweise basierend auf "FiRa") und/oder mittels WiFi-Technologie erfolgt. Ein definiertes Bestimmen der Position des zumindest einen Tags T1 durch das zweite Cluster C2 kann daher durch die Methode der Trilateration erfolgen.

Der Tag T1 ist als Transponder beispielsweise an einem Flurförderfahrzeug in Form eines Staplerfahrzeugs als mobiles Objekt MO1 angeordnet, welcher räumlich zwischen den Clustern C1 und C2 bewegt werden kann oder bewegt wird, womit ein Wechsel des Abdeckungsbereichs des jeweiligen Clusters C1, C2 einhergeht. Ergänzend ist ein weiterer Tag T2 in Figur 1 dargestellt, welcher beispielsweise an einem mobilen Objekt MO2 in Form eines Smartphones oder Tablets angeordnet ist.

Das Ortungssystem umfasst eine erfindungsgemäße Management-Layer-Einrichtung ME und/oder einen erfindungsgemäßen Management-Layer-Dienst MD. Die Management-Layer-Einrichtung ME ist zur Bereitstellung des Management-Layer-Diensts MD konfiguriert, um ein Verfahren zum Betrieb des Ortungssystems zur Bestimmung der Position Po1, Po2 des Tags T1 und/oder des Tags T2 auszuführen. Die Management-Layer-Einrichtung ME kann teilweise in Hardware und/oder in Software ausgebildet und/oder realisiert sein. Die Management-Layer-Einrichtung ME ist eine zentrale und/oder gemeinsame und/oder eine einzige Management-Layer-Einrichtung ME für das Ortungssystem.

Die Management-Layer-Einrichtung ME ist zur Herstellung einer Kommunikationsverbindung mit der Mehrzahl von ersten Ankern S11, S12, S13, S14 des ersten Clusters C1 und einer Kommunikationsverbindung mit der Mehrzahl von zweiten Ankern S21, S22, S23, S24 des zweiten Clusters C2 konfiguriert. Die Management-Layer-Einrichtung ME umfasst hierzu vorzugsweise eine zentrale Schnittstelleneinheit SE. Die zentrale Schnittstelleneinheit SE ist konfiguriert, jeweilige Kommunikationssignale der Kommunikationsverbindungen mit der Mehrzahl von ersten Ankern S11, S12, S13, S14 und mit der Mehrzahl von zweiten Ankern S21, S22, S23, S24 in Abhängigkeit der Konfiguration des jeweiligen Clusters C1, C2 zu konvertieren und/oder zu übersetzen, um eine Kompatibilität zwischen den Kommunikationsverbindungen herzustellen.

Die Management-Layer-Einrichtung ME ist jeweils zur Orchestrierung einer Synchronisierung des ersten Clusters C1 und/oder des zweiten Clusters C2, und zur Herstellung einer Kommunikationsverbindung nach einem Verfahren wie hierin offenbart konfiguriert. Die Synchronisierung der Cluster C1 und C2 kann wie hierin offenbart im Wesentlichen gleichzeitig, zeitlich nacheinander und/oder zeitlich zumindest teilweise überlappend ausgeführt werden, um anschließend, nach dem Herstellen einer Kommunikationsverbindung zwischen jeweiligen Ankern S11, S12, S13, S14, S21, S22, S23, S24, bei einem entsprechenden Zonenwechsel des mobilen Objekts MO1 ein definiertes Bestimmen der Position Po1, Po2 des Tags T1 zu jeweiligen Zeitpunkten t1, t2 über das erste Cluster C1 und über das zweite Cluster C2 hinweg im Wesentlichen kontinuierlich und/oder im Wesentlichen konsistent, vorzugsweise ohne Unterbrechungen, Störungen oder Fehlerzustände, zu gewährleisten.

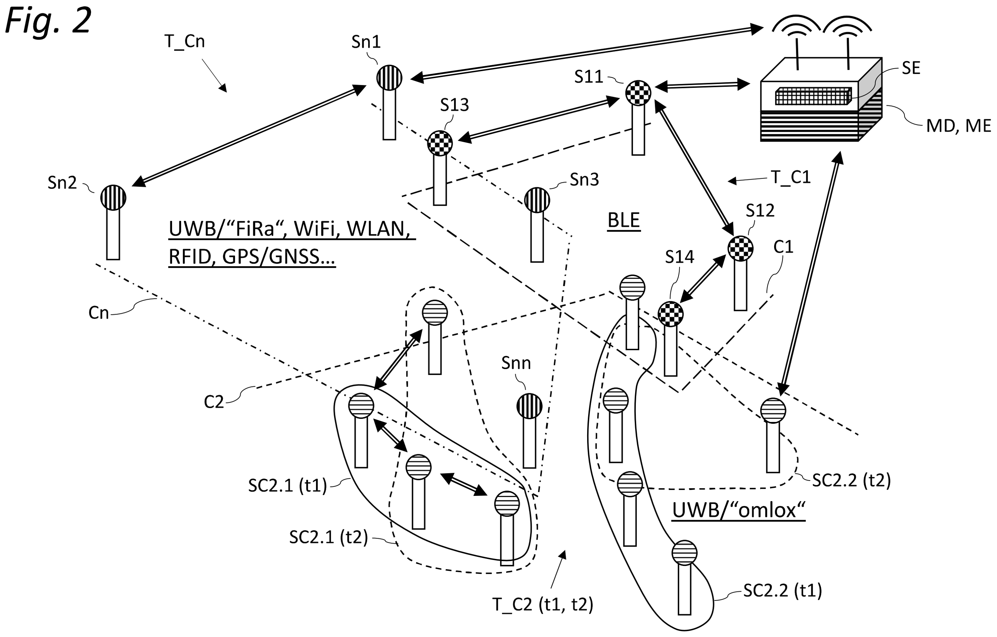

Figur 2 zeigt in schematischer und weiter vereinfachter Darstellung ein zweites Ortungssystem, welches mit dem Verfahren gemäß der vorliegenden Erfindung betrieben werden kann und/oder welches zur Ausführung des Verfahrens gemäß der vorliegenden Erfindung konfiguriert ist.

Das Ortungssystem umfasst ein erstes Cluster C1 mit den vier Ankern S11, S12, S13, S14, welche zusammen eine erste Topologie T_C1 bilden. Das Ortungssystem umfasst ein zweites Cluster C2 mit jeweiligen Ankern, welche aus Gründen der Übersichtlichkeit nicht näher gekennzeichnet sind. Das zweite Cluster C2 dient zur Veranschaulichung der Einteilung zumindest eines Teils des zweiten Clusters C2 in Sub-Cluster SC2.1 und SC2.2 mit jeweils einer definierten Anzahl an Ankern zu jeweiligen unterschiedlichen Zeitpunkten t1, t2 im Zuge der Orchestrierung der Synchronisierung durch den Management-Layer-Dienst MD der Management-Layer-Einrichtung ME, womit ferner die Ausbildung einer unterschiedlichen Topologie T_C2 für das zweite Cluster C2 einhergeht.

Ergänzend ist beispielhaft ein weiteres Cluster Cn mit jeweiliger Topologie T_Cn dargestellt, welche durch die Anker Sn1, Sn2, Sn3 und Snn ausgebildet wird. Das weitere Cluster Cn kann auf einer zu den Clustern C1 und C2 unterschiedlichen Kommunikationstechnologie oder auf einem unterschiedlichen Kommunikationsprotokoll basieren.

Jedes Cluster C1, C2, Cn kann hinsichtlich eines Kommunikationsprotokolls und/oder einer Kommunikationstechnologie unterschiedlich konfiguriert sein (siehe hierzu die jeweils angegebenen Abkürzungen in Figur 2).

Durch das Verfahren gemäß der vorliegenden Erfindung kann mittels eines einzigen und/oder eines zentralen Management-Layer-Diensts MD und/oder mittels einer einzigen und/oder einer zentralen Management-Layer-Einrichtung ME eine Kommunikationsverbindung zwischen jedem Cluster C1, C2, Cn hergestellt werden und insbesondere eine jeweilige Synchronisierung von Ankern ausgeführt werden.

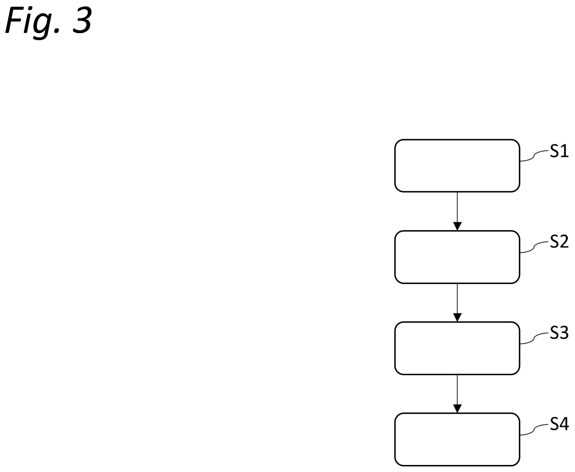

Figur 3 zeigt ein Ablaufdiagramm eines ersten Ausführungsbeispiels des Verfahrens gemäß der vorliegenden Erfindung.

Das Verfahren beginnt mit dem Verfahrensschritt S1 mit dem Herstellen einer Kommunikationsverbindung zwischen dem Management-Layer-Dienst MD und der Mehrzahl von ersten Ankern S11, S12, S13, S14 eines ersten Clusters C1 (siehe hierzu ergänzend beispielsweise Figur 1 und die dazugehörigen Erläuterungen).

In Verfahrensschritt S2 erfolgt ein Herstellen einer Kommunikationsverbindung zwischen dem Management-Layer-Dienst MD und der Mehrzahl von zweiten Ankern S21, S22, S23, S24 eines zweiten Clusters C2 (siehe hierzu ergänzend beispielsweise Figur 1 und die dazugehörigen Erläuterungen).

In Verfahrensschritt S3 wird durch den Management-Layer-Dienst MD ein Synchronisieren der Mehrzahl von ersten Ankern S11, S12, S13, S14 des ersten Clusters C1 und/oder der Mehrzahl von zweiten Ankern S21, S22, S23, S24 des zweiten Clusters C2 orchestriert. Das Synchronisieren der jeweiligen Anker S11, S12, S13, S14, S21, S22, S23, S24 und/oder Cluster C1, C2 kann wie hierin offenbart ausgeführt werden.

Beispielsweise kann mittels der Orchestrierung durch den Management-Layer-Dienst MD ein Synchronisieren der jeweiligen Anker S11, S12, S13, S14, S15, S21, S22, S23, S24 in Abhängigkeit einer jeweiligen Topologie T1, T2 des ersten und zweiten Clusters C1, C2 in einer definierten Reihenfolge erfolgen. Die definierte Reihenfolge kann in schematischer Darstellung abschnittsweise durch einen baumförmigen Verlauf und/oder abschnittsweise durch einen kaskadenförmigen Verlauf gekennzeichnet sein. Die definierte Reihenfolge kann durch eine räumliche Anordnung und/oder durch eine Kommunikationsadresse eines jeweiligen Ankers S11, S12, S13, S14, S15, S21, S22, S23, S24 definiert sein.

Der Verfahrensschritt S3 kann wie hierin offenbart ausgeführt werden.

Durch das Synchronisieren und/oder nach dem Synchronisieren mittels der Orchestrierung durch den Management-Layer-Dienst MD kann in Verfahrensschritt S4 eine Kommunikationsverbindung zwischen der Mehrzahl von ersten Ankern S11, S12, S13, S14 und der Mehrzahl von zweiten Ankern S21, S22, S23, S24 und somit zwischen dem ersten Cluster C1 und dem zweiten Cluster C2 hergestellt werden, um ein definiertes Bestimmen der Position eines Tags T1, T2 zumindest über den ersten und den zweiten Cluster C1, C2 hinweg im Wesentlichen kontinuierlich und/oder im Wesentlichen konsistent zu gewährleisten.

Im Rahmen der vorliegenden Offenbarung sind weitere zusätzliche und/oder modifizierte Verfahrensschritte, das heißt Abschnitte und Phasen des Verfahrens möglich. Ferner ist es auch möglich, dass hierin offenbarte Verfahrensschritte bei Ausführung des Verfahrens zumindest teilweise zeitlich parallel ausgeführt werden können und/oder auch in zeitlich unterschiedlicher Reihenfolge. Es ist ferner möglich, die weiteren hierin offenbarten Verfahrensschritte gemäß der vorliegenden Erfindung, welche im Zuge der Figurenbeschreibung nicht erwähnt werden, entsprechend miteinander zu kombinieren.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- C1: Cluster
- C2: Cluster
- Cn: Cluster
- DB: Datenbank
- MO1: mobiles Objekt
- MO2: mobiles Objekt
- MD: Management-Layer-Dienst
- Po1: Position
- Po2: Position
- SE: Schnittstelleneinheit
- S11: Anker
- S12: Anker
- S13: Anker
- S14: Anker
- S21: Anker
- S22: Anker
- S23: Anker
- S24: Anker
- Sn1: Anker
- Sn2: Anker
- Sn3: Anker
- Snn: Anker
- SC2.1: Sub-Cluster
- SC2.2: Sub-Cluster
- T_C1: Topologie
- T_C2: Topologie
- T_Cn: Topologie
- T1: Tag
- T2: Tag
- t1: Zeitpunkt
- t2: Zeitpunkt
- x: Positionskoordinate
- y: Positionskoordinate
- z: Positionskoordinate

## Patentansprüche

1. Verfahren zum Betrieb eines Ortungssystems zur Bestimmung einer Position (Po1, Po2) zumindest eines Tags (T1, T2), wobei das Ortungssystem einen Management-Layer-Dienst (MD), zumindest ein erstes Cluster (C1) mit einer Mehrzahl von ersten Ankern (S11, S12, S13, S14) und zumindest ein zweites Cluster (C2) mit einer Mehrzahl von zweiten Ankern (S21, S22, S23, S24) umfasst, wobei die Cluster (C1, C2) hinsichtlich ihres Abdeckungsbereichs zumindest teilweise überlappen und zueinander unterschiedlich konfiguriert sind, vorzugsweise zumindest hinsichtlich eines Kommunikationsprotokolls und/oder einer Kommunikationstechnologie, umfassend:
a) Herstellen einer Kommunikationsverbindung zwischen dem Management-Layer-Dienst (MD) und der Mehrzahl von ersten Ankern (S11, S12, S13, S14);
b) Herstellen einer Kommunikationsverbindung zwischen dem Management-Layer-Dienst (MD) und der Mehrzahl von zweiten Ankern (S21, S22, S23, S24);
c) Synchronisieren der Mehrzahl von ersten Ankern (S11, S12, S13, S14) und/oder der Mehrzahl von zweiten Ankern (S21, S22, S23, S24) jeweils orchestriert durch den Management-Layer-Dienst (MD);
d) Herstellen einer Kommunikationsverbindung zwischen der Mehrzahl von ersten Ankern (S11, S12, S13, S14) und der Mehrzahl von zweiten Ankern (S21, S22, S23, S24) durch den Management-Layer-Dienst (MD), um ein definiertes Bestimmen der Position des zumindest einen Tags (T1, T2) zumindest über den zumindest einen ersten und den zumindest einen zweiten Cluster (C1, C2) hinweg kontinuierlich und/oder konsistent zu gewährleisten.

2. Verfahren nach Anspruch 1,
wobei das Synchronisieren (c) in Abhängigkeit einer jeweiligen Topologie (T_C1, T_C2) des zumindest einen ersten Clusters (C1) und/oder des zumindest einen zweiten Clusters (C2) in einer definierten Reihenfolge erfolgt,
wobei vorzugsweise die definierte Reihenfolge abschnittsweise durch einen baumförmigen Verlauf und/oder abschnittsweise durch einen kaskadenförmigen Verlauf gekennzeichnet ist, und/oder
wobei vorzugsweise die definierte Reihenfolge und/oder die jeweilige Topologie (T_C1, T_C2) durch eine räumliche Anordnung und/oder durch Kommunikationsadressen, vorzugsweise MAC-Kommunikationsadressen, der Mehrzahl von ersten Ankern (S11, S12, S13, S14) und der Mehrzahl von zweiten Ankern (S21, S22, S23, S24) definiert wird.

3. Verfahren nach einem der vorhergehenden Ansprüche,
wobei das Synchronisieren (c) in Abhängigkeit einer jeweiligen Topologie (T_C1, T_C2) des zumindest einen ersten Clusters (C1) und/oder des zumindest einen zweiten Clusters (C2) definiert sequentiell, definiert überlagernd und/oder definiert periodisch erfolgt,
vorzugsweise von einem jeweiligen Referenzanker (S11, S21) der Mehrzahl von ersten Ankern (S11, S12, S13, S14) und der Mehrzahl von zweiten Ankern (S21, S22, S23, S24) ausgehend.

4. Verfahren nach einem der vorhergehenden Ansprüche,
umfassend:
Verändern und/oder Anpassen einer jeweiligen Topologie (T_C1, T_C2) des zumindest einen ersten Clusters (C1) und/oder des zumindest einen zweiten Clusters (C2) durch den Management-Layer-Dienst (MD), um eine Ausbreitung von Zeitfehlern zwischen jeweiligen Ankern der Mehrzahl von ersten Ankern (S11, S12, S13, S14) und/oder der Mehrzahl von zweiten Ankern (S21, S22, S23, S24) zu minimieren.

5. Verfahren nach einem der vorhergehenden Ansprüche,
wobei das Synchronisieren (c) in Abhängigkeit einer jeweiligen Priorität der Anker (S11, S12, S13, S14) innerhalb des zumindest einen ersten Clusters (C1) und/oder der Anker (S21, S22, S23, S24) innerhalb des zumindest einen zweiten Clusters (2) erfolgt,
wobei vorzugsweise die jeweilige Priorität dynamisch von dem Management-Layer-Dienst (MD) festgelegt wird.

6. Verfahren nach einem der vorhergehenden Ansprüche,
wobei das Synchronisieren (c) umfasst:
Erzeugen zumindest eines Synchronisierungssignals, welches zumindest eine Zeitstempelinformation und/oder zumindest eine Korrekturwertinformation umfasst,
welche jeweils mittels einer bidirektionalen Kommunikationsverbindung zueinander benachbarter Ankern (S11, S12, S13, S14; S21, S22, S23, S24) erfasst ist, um in Abhängigkeit des erzeugten zumindest einen Synchronisierungssignals das Synchronisieren (c) dynamisch anzupassen und/oder einen Zeitgleichlauf der Mehrzahl von Ankern (S11, S12, S13, S14; S21, S22, S23, S24) einzustellen,
wobei vorzugsweise die zumindest eine Zeitstempelinformation eine Zeitdifferenz, eine Laufzeit und/oder eine Phasenverschiebung umfasst, und/oder
wobei vorzugsweise die zumindest eine Korrekturwertinformation zur Kompensation von Laufzeitunterschieden dient.

7. Verfahren nach einem der vorhergehenden Ansprüche,
umfassend:
Ausführen eines Einrichtungsmodus durch den Management-Layer-Dienst (MD), um zumindest ein weiteres Cluster (Cn) mit einer Mehrzahl von weiteren Ankern (Sn1, Sn2, Sn3, Snn) zu detektieren;
Bestimmen zumindest einer weiteren Topologie (T_Cn) des zumindest einen weiteren Clusters (Cn) in Abhängigkeit zumindest eines Einrichtungssignals; und
Wiederholen der Verfahrensschritte b), c) und d) hinsichtlich des zumindest einen weiteren Clusters (Cn).I

8. Verfahren nach Anspruch 7,
Bestimmen der Positionen der weiteren Anker (Sn1, Sn2, Sn3, Snn) in Abhängigkeit des zumindest einen Einrichtungssignals und/oder Abrufen der Positionen der weiteren Anker (Sn1, Sn2, Sn3, Snn);
Konfigurieren und/oder Anpassen der Kommunikationsverbindung mit denjenigen weiteren Ankern (Sn1, Sn2, Sn3, Snn), welche in Abhängigkeit ihrer bestimmten und/oder abgerufenen Position außerhalb einer definierten Kommunikationsreichweite liegen, um eine durchgehende Kommunikationsverbindung und/oder eine interferenzfreie Kommunikation zu gewährleisten.

9. Verfahren nach einem der vorhergehenden Ansprüche,
umfassend:
Unterteilen des zumindest einen ersten Clusters (C1) und/oder des zumindest einen zweiten Clusters (C2) in jeweils zumindest ein erstes Sub-Cluster (SC2.1) und zumindest ein zweites Sub-Cluster (SC2.2) mit jeweils einer definierten Anzahl an Ankern der Mehrzahl von ersten Ankern (S11, S12, S13, S14) und/oder der Mehrzahl von zweiten Ankern (S21, S22, S23, S24); und
Wiederholen der Verfahrensschritte c) und d) hinsichtlich des jeweils zumindest einen ersten und zweiten Sub-Clusters (SC2.1, SC2.2).

10. Verfahren nach Anspruch 9,
umfassend:
Zusammenführen des zumindest einen ersten Sub-Clusters (SC2.1) und des zumindest einen zweiten Sub-Clusters (SC2.2) sobald ein Synchronisieren der definierten Anzahl an Ankern der Mehrzahl von ersten Ankern (S11, S12, S13, S14) und/oder der Mehrzahl von zweiten Ankern (S21, S22, S23, S24) erfolgt ist.

11. Verfahren nach einem der vorhergehenden Ansprüche,
wobei das definierte Bestimmen der Position des zumindest einen Tags (T1, T2) durch zumindest eine von folgenden Methoden erfolgt:
∘ Trilateration, vorzugsweise in Kombination mit der Ultra-Wideband (UWB)-Technologie;
∘ Triangulation, vorzugsweise in Kombination mit der Bluetooth Low Energy (BLE)-Technologie.

12. Management-Layer-Einrichtung (ME) für ein Ortungssystem zur Bestimmung einer Position (Po1, Po2) zumindest eines Tags (T1, T2), wobei das Ortungssystem zumindest ein erstes Cluster (C1) mit einer Mehrzahl von ersten Ankern (S11, S12, S13, S14) und zumindest ein zweites Cluster (C2) mit einer Mehrzahl von zweiten Ankern (S21, S22, S23, S24) umfasst, wobei die Cluster (C1, C2) hinsichtlich ihres Abdeckungsbereichs zumindest teilweise überlappen und zueinander unterschiedlich konfiguriert sind, vorzugsweise zumindest hinsichtlich eines Kommunikationsprotokolls und/oder einer Kommunikationstechnologie, wobei die Management-Layer-Einrichtung (ME) konfiguriert ist:
a) eine Kommunikationsverbindung mit der Mehrzahl von ersten Ankern (S11, S12, S13, S14) herzustellen;
b) eine Kommunikationsverbindung mit der Mehrzahl von zweiten Ankern (S21, S22, S23, S24) herzustellen;
c) eine Synchronisierung der Mehrzahl von ersten Ankern (S11, S12, S13, S14) und/oder die Mehrzahl von zweiten Ankern (S21, S22, S23, S24) zu orchestrieren;
d) eine Kommunikationsverbindung zwischen der Mehrzahl von ersten Ankern (S11, S12, S13, S14) und der Mehrzahl von zweiten Ankern (S21, S22, S23, S24) herzustellen, um ein definiertes Bestimmen der Position des zumindest einen Tags (T1, T2) zumindest über den zumindest einen ersten und den zumindest einen zweiten Cluster (C1, C2) hinweg kontinuierlich und/oder konsistent zu gewährleisten, wobei vorzugsweise die Management-Layer-Einrichtung (ME) konfiguriert ist, ein Verfahren nach einem der vorhergehenden Ansprüche auszuführen.

13. Management-Layer-Einrichtung (ME) nach Anspruch 12;
wobei die Management-Layer-Einrichtung (ME) eine zentrale Schnittstelleneinheit (SE) umfasst, welche konfiguriert ist, jeweilige Kommunikationssignale der Kommunikationsverbindungen mit der Mehrzahl von ersten Ankern (S11, S12, S13, S14) und mit der Mehrzahl von zweiten Ankern (S21, S22, S23, S24) in Abhängigkeit der Konfiguration des jeweils anderen Clusters (C1, C2) zu konvertieren und/oder zu übersetzen, um eine Kompatibilität zwischen den Kommunikationsverbindungen herzustellen.

14. Computerprogrammprodukt, welches einen Computerprogrammcode umfasst, der auf einem maschinenlesbaren Medium gespeichert ist und/oder durch zumindest eine elektromagnetische Welle repräsentiert wird, welche zumindest ein Computerprogrammcodesegment des Computerprogrammcodes umfasst,
wobei der Computerprogrammcode computerausführbare Anweisungen zum Ausführen eines Verfahrens zum Betrieb eines Ortungssystems nach einem der vorhergehenden Ansprüche 1 bis 11 umfasst,
vorzugsweise bei Ausführung auf einer Management-Layer-Einrichtung (ME) nach Anspruch 12 oder 13.
